# EUROPEAN PATENT APPLICATION

(11) **EP 4 682 390 A1**
(43) Date of publication of application: **21.01.2026**
(21) Application number: 25188633.9
(22) Date of filing: 09.07.2025
(51) Int. Cl.: F16B 5/06

(54) **DETACHABLE FASTENER CLIP**

(30) Priority: 18.07.2024 US 202463673143 P; 01.02.2025 US 202563752749 P; 30.06.2025 US 202519253995
(71) Applicant: Termax Company, Lake Zurich, IL 60047 (US)
(72) Inventor: DICKINSON, Daniel James, Lincolnshire, Illinois, 60069 (US)
(74) Representative: Weinstein Services & Conseils

(57) **Abstract**

A detachable multi-stage automotive fastener clip attaches a body panel to a chassis slot. The fastener clip includes a U-shaped upper clip (1230) having at least two wings (1250) laterally spaced apart. The wings include: a wing tip (1252), a bent wing (1256), an inclined plane . A flex point is formed on a lower wing portion (1302) operative to engage and detach with the chassis slot. A U-shaped lower clip (1220) removably attaches to the U-shaped upper clip. At least two walls (1410) are laterally spaced apart at an open wall end. A ramp, a shoulder and a retaining ledge are formed on the at least two walls away from the open wall end operative to engage the inclined plane. A base (1330) at a closed end opposite the open wall end is formed such that the base is formed between a lower wall portion from each of the at least two walls forming a U shape.

## Description

### FIELD OF THE INVENTION

The invention relates generally to devices for fastening objects, and more particularly to an adaptive fastener for insertion into an engagement structure, such as a vehicle chassis, a hollow substrate, a door panel, a wall, a plate or any suitable surface.

### BACKGROUND OF THE INVENTION

A number of devices and fasteners are currently available for fastening panels, such as body panels and automobile interior trim piece panels, to the chassis of a vehicle. As used herein, a body panel refers to, for example, any interior or exterior body panel on a vehicle, a plastic interior trim piece, door panel, headliner or any interior trim piece. Additionally, the panel may be any suitable exterior body panel, such as a fender, bumper, quarter panel or door panel. The chassis of the vehicle may include any substrate, plate, body panel, structural framework, chassis component or subcomponent, wall or any suitable object.

These conventional fastener devices provide approximately relatively equal levels of insertion and extraction force. These body panels often attach to the chassis of an automobile with a relatively high level of insertion force while providing a relatively low level of extraction force.

One-piece fasteners have a base to attach to a body panel and a post attached to the base and wings attached at least to the top of the post at a tip of the fastener for fastening to a frame slot. However, if the frame slot and the fastener are misaligned then the forces on the wings are unequal since the wing closest to the slot edge will experience higher wing compression while the other wing will have insufficient springing force to engage the slot. As the clip is forced into the slot, such high forces on one wing may cause the wing to break off thus rendering the fastener incapable of fastening the body panel to the frame. Worse, the broken, damaged or weakened wing can cause detachment of the body panel or contribute to rattles.

The wings of conventional fasteners have a sharp, unsmooth groove to engage the edge of the frame slot. When the clip is removed however, the sharp edges of the frame slot cut into the softer plastic and cut a groove. During manufacture, the slots are typically formed in the frame of the vehicle, such as in an inner roof or door sheet metal structure, by punching the sheet metal. As the punch enters the sheet metal, the outer part of the sheet metal is pushed toward the inside and a metal puncture or ridge is formed on the inside of the sheet metal. The resulting slot edge on the outer part of the slot is relatively smooth; however, the inner part of the slot edge is sharp and rough. Upon removal of the fastener clip, the sharp edges of the frame cut off the groove so that the clip may not be reinserted and reusable.

If the slot is off-center or if the sheet metal varies in thickness or if tolerances in production of the slot in the vehicle chassis or in the trim-piece exist, for example, then engagement of one portion of the hole in the chassis with one of the wings may not provide suitable frictional engagement. Twisting of the body panel will be likely more prevalent because less than all contact points are actually made with the slot of the vehicle chassis. As a result, conventional single piece fasteners do not self-align themselves when the fastener and the body panel are misaligned, and are prone to wing breakage such that the fastener cannot be re-attached.

Conventional fasteners typically do not adequately secure the panel to the vehicle chassis having variations in slot size and location or sheet metal with different curvature or thicknesses throughout. Conventional single piece fasteners do not self-align themselves when the fastener and the body panel are misaligned, and are prone to wing breakage such that the fastener cannot be re-attached. Also, conventional fasteners are not suitable when subjected to a variety of environmental conditions, such as varying temperatures and in the presence of vibration at various levels of amplitude and frequency. For example, conventional fasteners of this type typically do not prevent or minimize the amount of buzzing, rattling or any other type of noise that may cause attention to the occupants of the vehicle or otherwise weaken the attachment. Conventional fasteners do not adequately accommodate various levels of production tolerances, such as various dimensions amongst, for example, the body panels as well as the vehicle chassis. Thus, conventional fastener devices typically do not self-align nor adequately fasten to a range of sheet metal thicknesses and do not minimize or eliminate buzzing and rattling and do not sufficiently accommodate variations in production tolerances. As a result, wear, squeaks, rattles, buzzing, corrosion and loss of elasticity and loss of sealing may result, especially after years of vehicle operation and exposure to vibration, heat, humidity, and other environmental conditions.

### BRIEF DESCRIPTION OF THE DRAWINGS

Figs. 1 through 11 illustrate a fastener clip according to a first embodiment and Figs. 12 through 31 illustrate a fastener clip according to a second embodiment.
Fig. 1 is a sideview of a fastener clip in a stage 1 according to one embodiment;
Fig. 2 is sideview view of the fastener clip and a partially inserted retainer in a stage 2 according to another embodiment;
Fig. 3 is sideview view of the fastener clip and an inserted retainer in a stage 2 according to another embodiment;
Fig. 4 is a side view of the fastener clip engaging an upper ramp in a stage 3 according to one embodiment;
Fig. 5 is a side view of a retainer partially inserted in a fastener clip engaging a notch at a stage 3 according to one embodiment;
Fig. 6 is a side view of a retainer inserted in the fastener clip engaging a notch in a stage 3 according to one embodiment;
Fig. 7 is a side view of the fastener clip prior to engagement into a chassis slot according to one embodiment;
Fig. 8 is a side view of a fastener clip attached to a support rib of a body panel in accordance with an exemplary embodiment;
Fig. 9 is a perspective view of a grommet;
Fig.10 is a perspective view of a pin according to one embodiment;
Fig 11 is a perspective view of a pin inserted into a grommet according to one embodiment;
Figures 12 through 31 illustrate an alternative embodiment of the fastener clip generally;

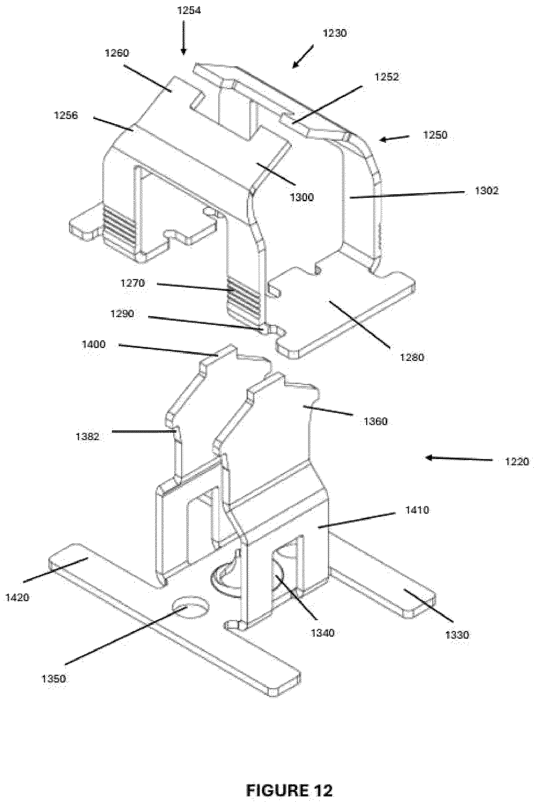

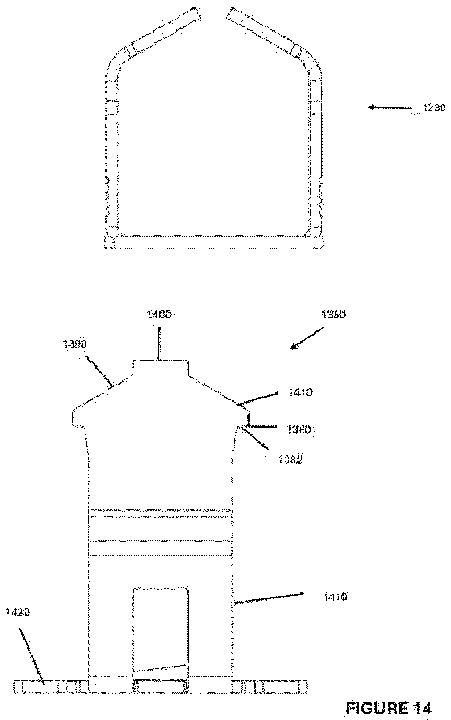

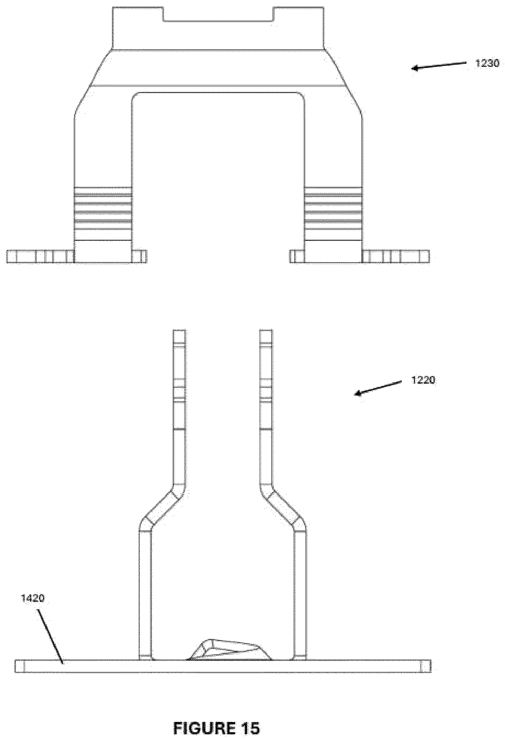

Fig. 12, 14 and 15 are various views of an upper clip and a lower clip according to the alternative embodiment;

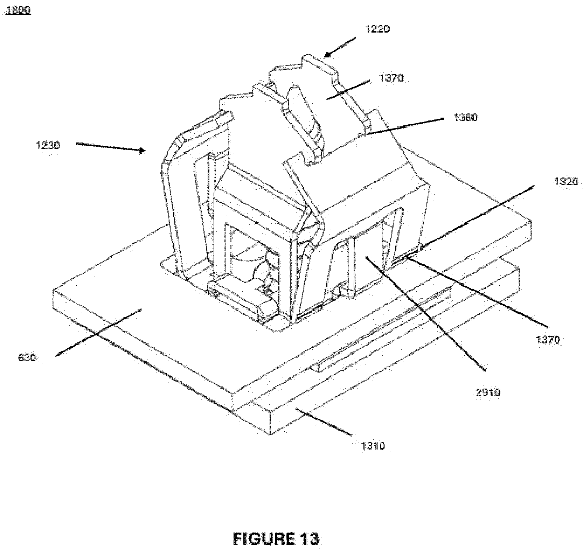

Fig. 13 is a perspective view of the upper clip including a wing extension;

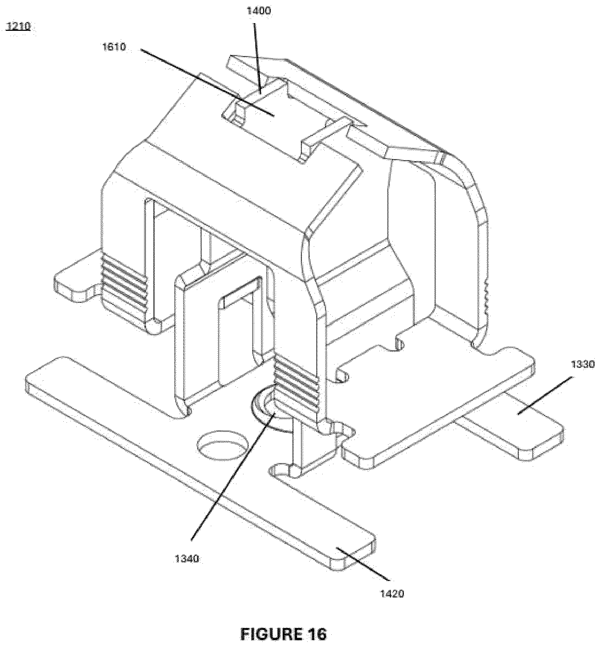

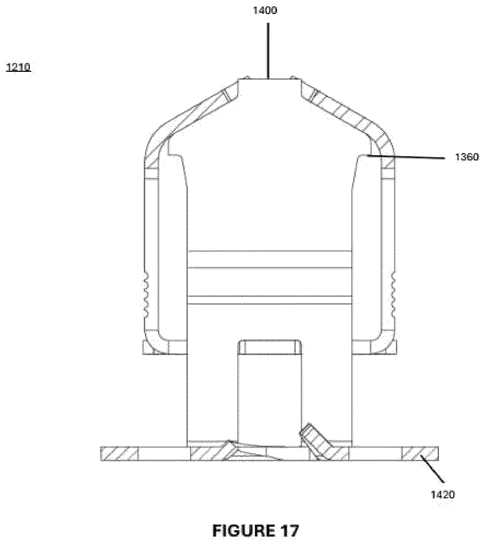

Figs 16 and 17 are perspective and side views of the upper clip and a lower clip in a shipping configuration at a stage one according to the alternative embodiment;

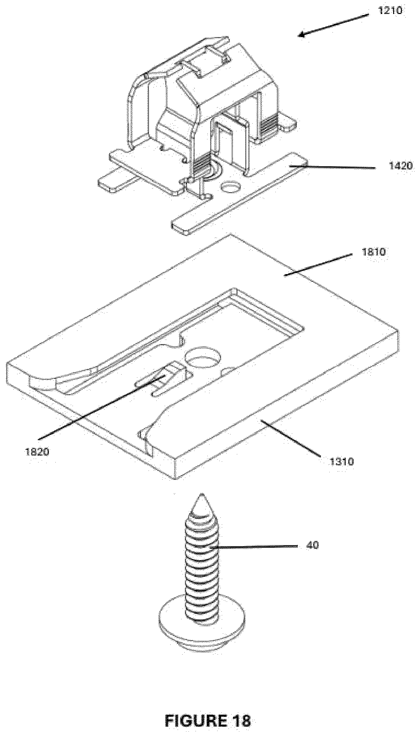

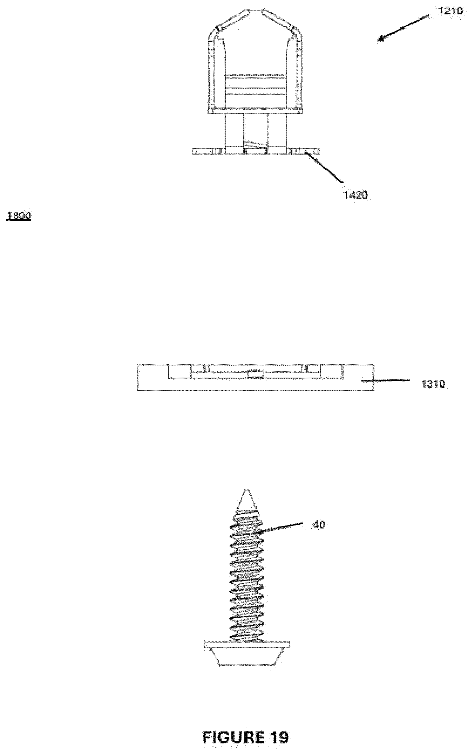

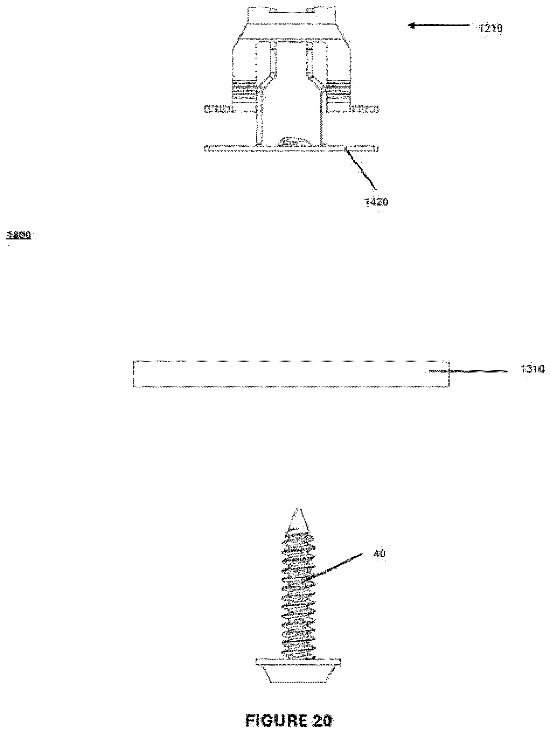

Figs. 18, 19 and 20 are various views of the upper clip and a lower clip for attachment with a body panel via a retainer at a stage 2 according to the alternative embodiment;

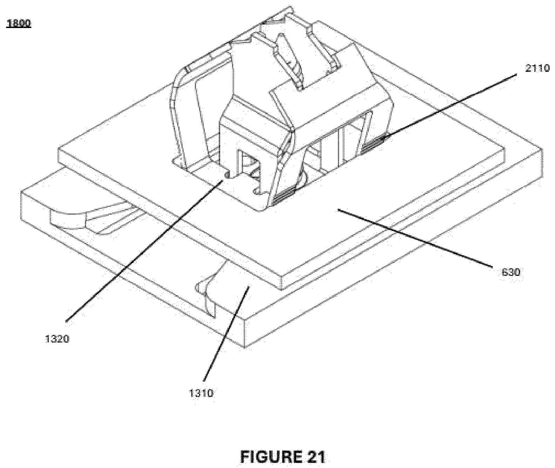

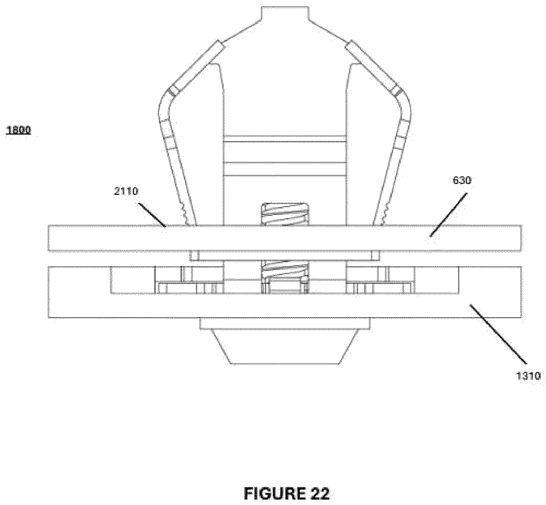

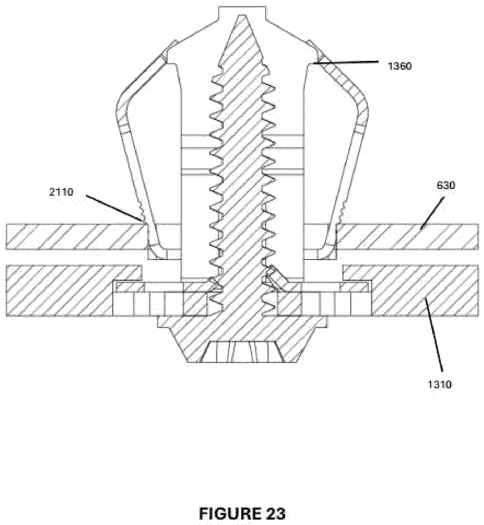

Figs. 21, 22 and 23 are various views of the upper clip and a lower clip attaching a body panel to a chassis prior to entering engagement at stage 3 according to the alternative embodiment;

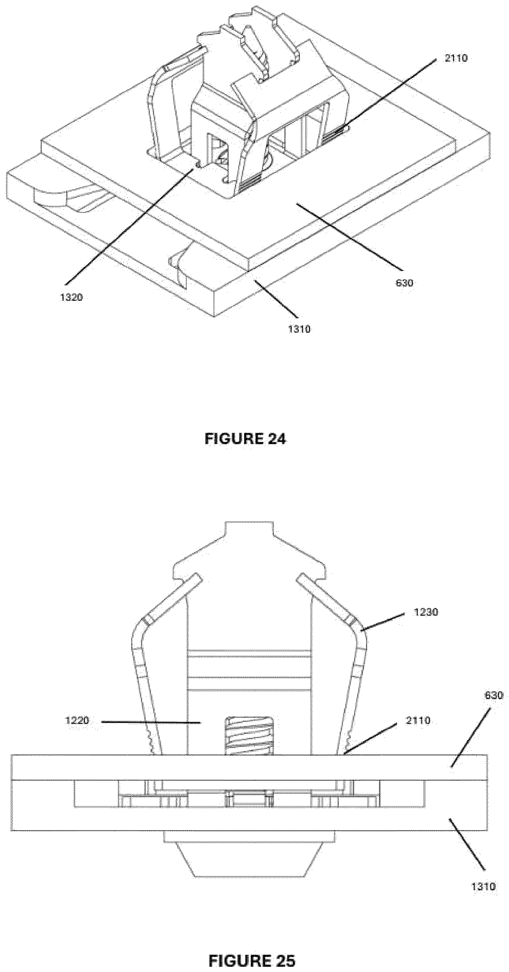

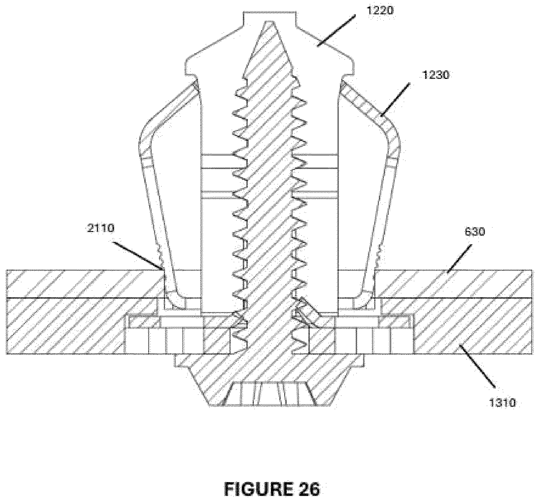

Figs. 24, 25 and 26 are various views of the upper clip and a lower clip attaching a body panel to a chassis in an engagement stage 3 according to the alternative embodiment;

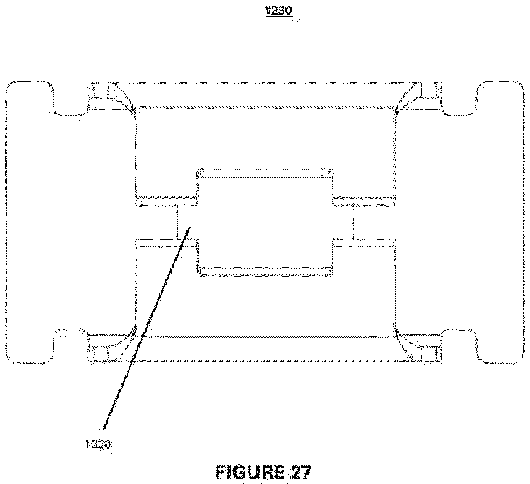

Fig 27 is a top view of the upper clip and lower clip;

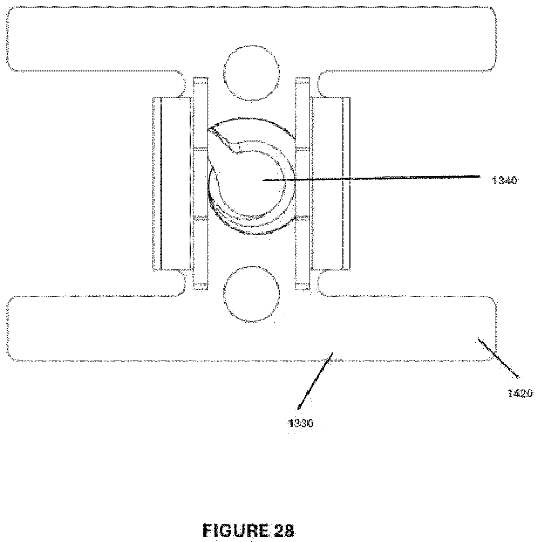

Fig. 28 is a bottom view of the upper clip and lower clip; and

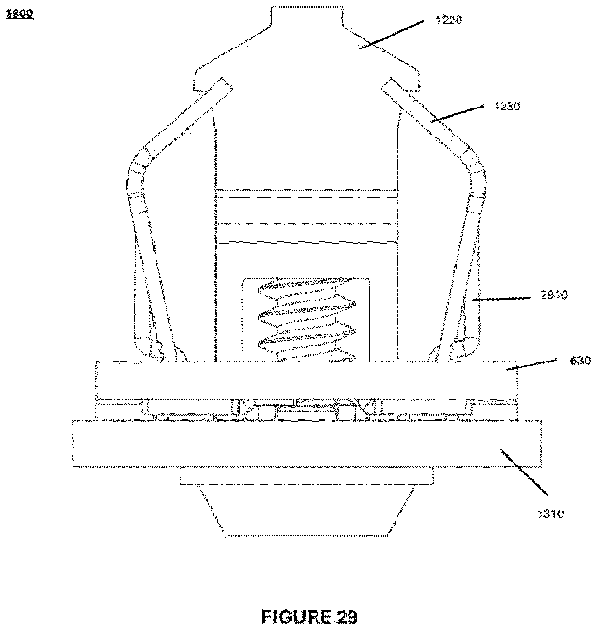

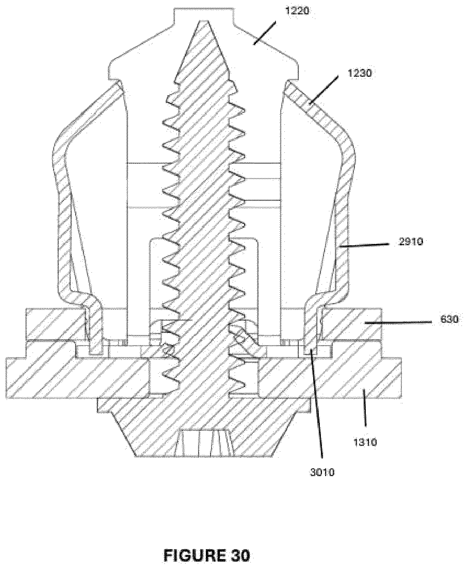

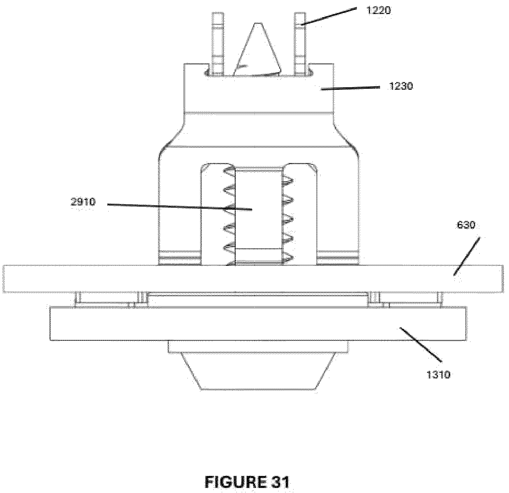

Figs. 29, 30 and 31 are various views of the upper clip including a wing extension of Fig. 13, and a lower clip attaching a body panel to a chassis after engagement at stage 3.

### DETAILED DESCRIPTION OF THE PREFERRED EMBODIMENTS

A detachable multistage plastic automotive fastener clip attaches a body panel to a chassis slot. The fastener clip includes a pin having a pin head at one end of the pin. The pin includes: an assembly notch formed in the pin head, a flange on an end opposite the pin head, and walls formed between the pin head and the flange. A grommet removably attaches to the pin. A grommet base includes two parallel shoulders on opposite ends of the grommet base, and opposite net pads. At least two wings extend from each of the parallel opposite shoulders. Wing tips extend at an end of the at least two wings. The wings comprising a flex point operative to engage and detach with the chassis slot. A retainer is removably inserted into a hole in the flange to engage the walls of the pin and to removably attach to the body panel.

According to an alternative embodiment, a detachable multi-stage automotive fastener clip attaches a body panel to a chassis slot. The fastener clip may be metal. The fastener clip includes a U-shaped upper clip having at least two wings laterally spaced apart. The wings include: a wing tip, a bent wing, an inclined plane. A flex point is formed on a lower wing portion operative to engage and detach with the chassis slot. A U-shaped lower clip removably attaches to the U-shaped upper clip. At least two walls are laterally spaced apart at an open wall end. A ramp, a shoulder and a retaining ledge are formed on the at least two walls away from the open wall end operative to engage the inclined plane. A base at a closed end opposite the open wall end is formed such that the base is formed between a lower wall portion from each of the at least two walls forming a U shape.

High retention clips have automotive applications in high retention force environments such as pull handles, visors, A, B, and C pillars. For high retention applications, metal is used because of the high retention force. Metal clips engage a slot in an automotive chassis and have the ability to adjust or adapt to different chassis thickness or variations in slot dimensions such as in variations in production tolerance. Metal clips may also include engagement regions such as depressions in the metal to increase retention and to accommodate manufacturing tolerances to maintain retention. Convention clips do not adapt to sheet metal thickness and thus do not accept tolerances in production dimensions such as the distance from the chassis to a body panel. These tolerances result in looseness causing movement, vibration, rattling and even the clip not engaging the chassis slot at all. Further, conventional clips are expensive to manufacture. Conventional plastic clips do not have the high retention force necessary for heavy duty application and thus conventional high retention clips are not made of plastic.

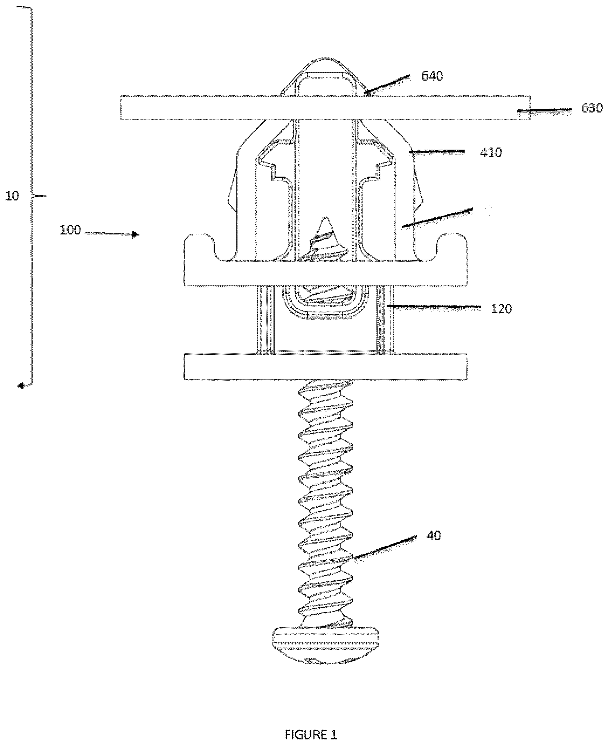

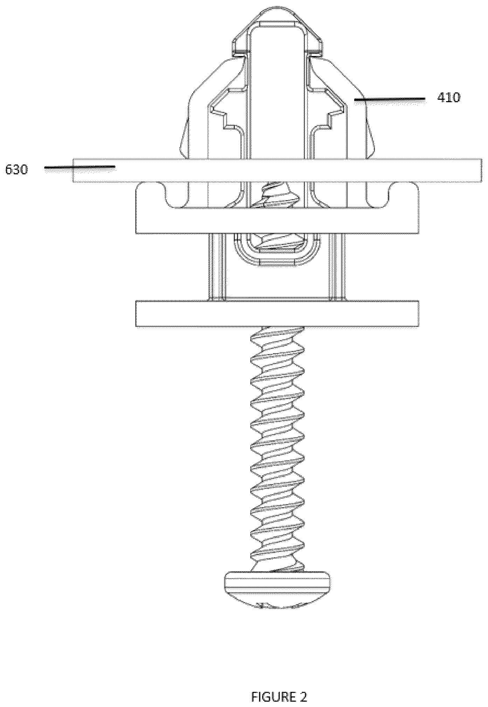

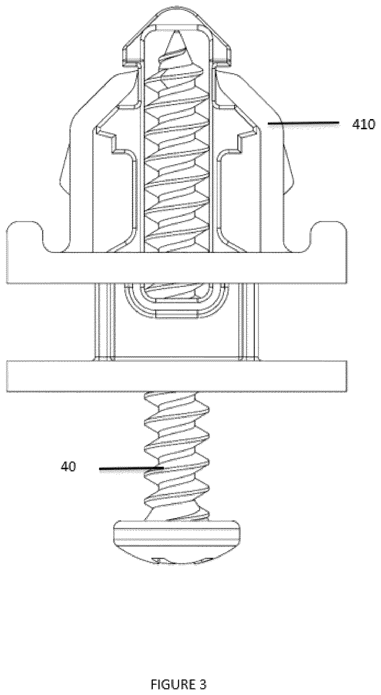

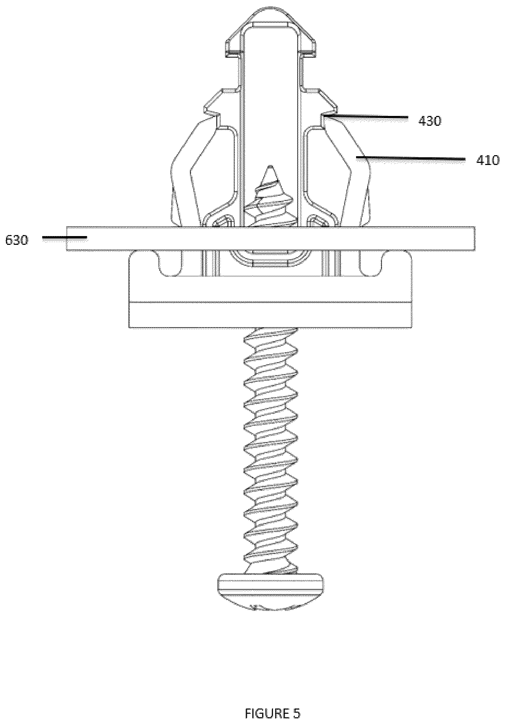

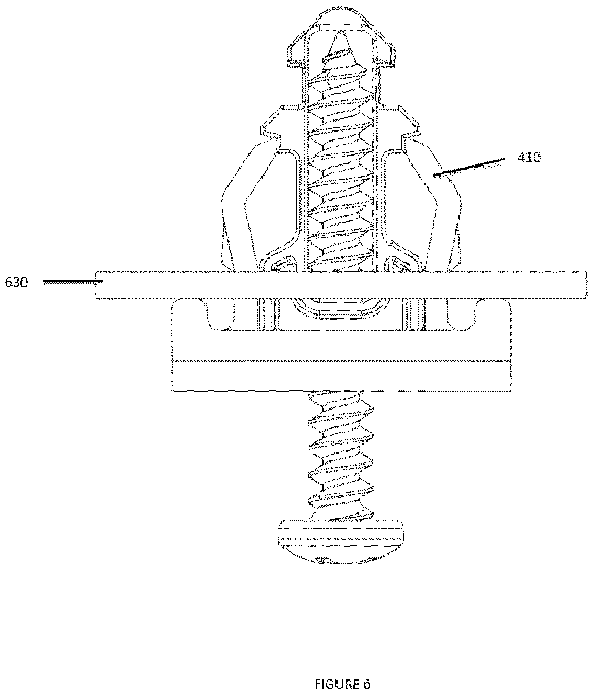

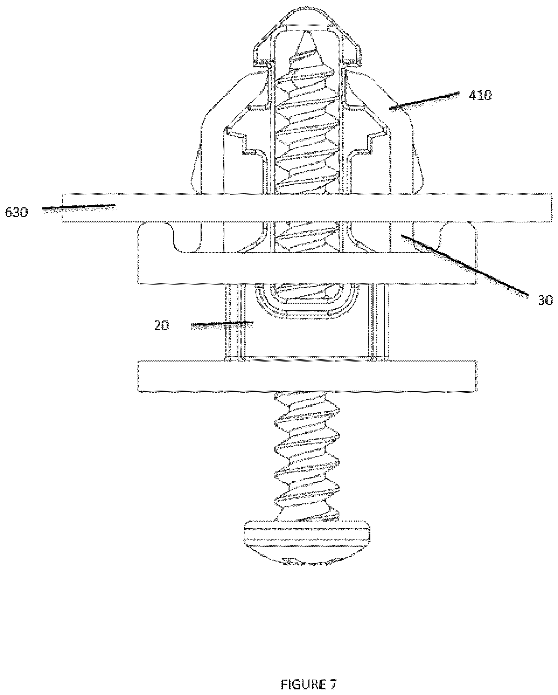

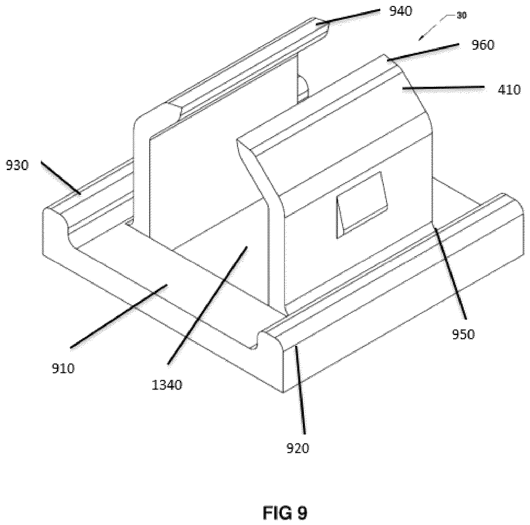

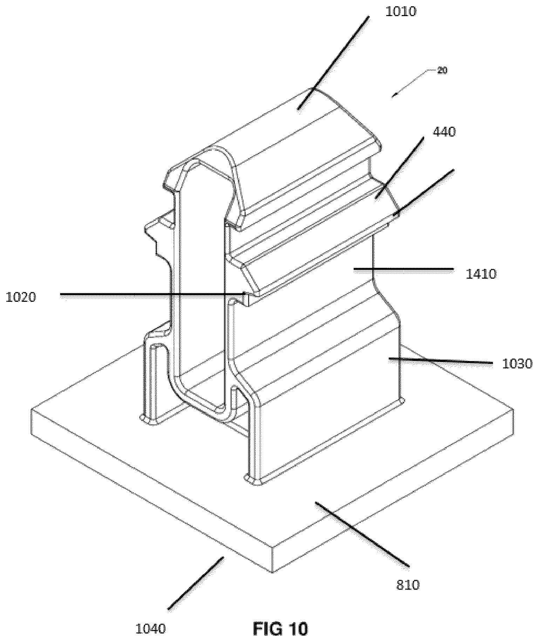

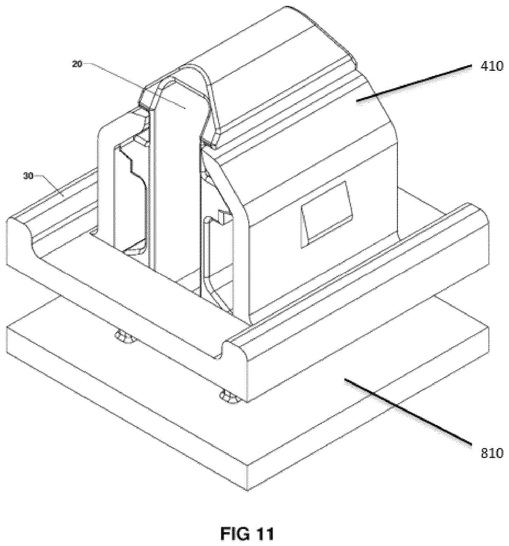

Figs. 1-12 illustrate a pin 20 and grommet 30 may be made of non-metal material such as plastic and provides high retention forces suitable for heavy duty applications. Figs. 13-31 illustrate a two piece metal detachable automotive fastener clip 1210.

Among other advantages, the lead-in section functions to align the clip into a slot in the frame even if the clip is misaligned with the hole. The clip for example, may be attached to a body panel such as an interior door panel. Thus, the door panel assembly may be ready to be mated by pushing the assembly into the chassis or frame during assembly such that each of the clips independently self-align and fasten to a corresponding frame slot on the chassis. As each clip is pushed into the corresponding chassis slot on the chassis, a clip may be misaligned with the corresponding misaligned mating frame slot. According to one embodiment, the lead-in portion adapts to the misaligned slot by automatically aligning the wings on the clip with the door frame slot. For example, the lead-in portion moves the clip into the door frame slot such that the wings on the clip engage the frame slot with substantially balanced force between the wings; substantially equal force or at least avoids breaking or damaging at least one of the wings.

The fastener clip embodiments have a high level of extraction force yet securely and relatively easily facilitates attachment, detachment and reattachment of a body panel, such as an interior or exterior body panel with the vehicle chassis. The fastener clips are suitable for use in applications requiring attachment and reattachment and thus may be reused. The fastener clips are also suitable for use in various applications such as door panel mounting, headliners, trunk and hatch liners, pull handles, visor mounts and other trim panels or suitable panels. The dimensions of the chassis slot are so precise conventional wings can bow. Among other advantages, the wings comprise a flex point, having a width, length, thickness, one or more radius curves and pivot point(s) to provide very high extraction force levels while the insertion force level is relatively low.

The flex point creates an overhang and will engage the edge of the slot. In the first embodiment, once the retainer 40 is inserted into the pin 20, then as the retainer 40 and pin 20 are inserted into the slot, the net pads on the grommet 30 engage the bottom of the slot preventing the grommet 30 from traveling further into the slot, then the wings slide past the ramp causing the wings to flex outwardly. The distance between the pair of ramps and the wall is greater than the distance between the wing tips causing the wings to flex outwardly and snap (audibly and tactically) onto, engage and rest on the wall keeping the wings in tension and flexed. The flexed wings engaged on the walls in this stage are spread open and sets up the wing portion at the flex point to flex and overhang at the slot edge to provide the high retention engagement in the engaged position. In other words, the flex point acts as a fulcrum because the inside upper edge of the slot engages the flex point preventing the portion of the wing at the flex point from flexing outward. Since the wing flexes just above the slot edge above the flex point, the portion of the wing above the flex point overhangs and effectively hooks the wing at the flex point to the slot resulting in a high retention engagement.

In both embodiments, the wings effectively act as a plastic or metal spring. Since the wings are in flexed tension when sliding past the engagement ramp onto the interference wall, the wings snap audibly. This audible snap confirms to the operator that the pin 20 (lower clip 1220) engaged the interference wall so the operator knows that the clip is not in the pre-engagement position, but this provides a positive result and rather is in the engagement position. This ensures the body panels are fully engaged and thus prevents body panels from not fully engaging. The operator will hear a loud snap and/or feel a click to ensure positive engagement and in the positive engagement position in the engagement stage 3. A visual inspection of the body panel to check can confirm that the body panel is not flush, extending improperly or otherwise not engaged. For example, the operator may check for gaps in the panel so it will be apparent if the clip 10, 1210 is not snapped into the engagement position. The operator may then push the clip 10, 1210 in with sufficient force to snap the clip. The operator may also test to see if the clip 10, 1210 is engaged by pulling on the body panel 1310 with sufficient force according to the design requirements to determine the clip 10, 1210 is engaged. For example, if the design requirements specify a retention force of 100 pounds, then the operator may pull on the body panel 1310 with 100 pounds of force (+/- a tolerance test variance).

The same fastener clip may be used with variations in production tolerances and different sheet metal thicknesses and curvatures. For example, a vehicle may have different sheet metal thicknesses at various parts of the vehicle. The range of slot thicknesses varies continuously from a minimum thickness to a maximum thickness. For example, the minimum thickness may be 0.25 mm or less and the maximum thickness may be 6.0 mm or more. The fastener clip is operative for insertion into the slot defined in a first engagement structure, such as a vehicle chassis. Since the fastener clip adapts automatically to different sheet metal thicknesses and curvatures, the same fastener clip may be used throughout the vehicle thus eliminating the need for specific fastener clips for specific slot thicknesses.

The engagement portion also automatically adapts to different angles and variations of curvature or movement of slot, and sheet metal thicknesses, such as variations in the thickness of various portions of the vehicle chassis and variations in body panels to maintain a high level of extraction force relative to the insertion force. For example, during engagement the engagement portion continuously adapts to variations in thickness, curvature, slot thickness and shape, slot rim thickness and shape and dimensions of the vehicle chassis and/or in the body panel and other variations. According to one embodiment, only a single type or style of fastener clip need be used with a vehicle or application even if the thickness of the sheet metal varies or if the sheet metal moves or curves. According to one embodiment, each wing independently engages the slot of the vehicle chassis in a continuous rather than discrete manner. Further, each wing adapts to and dampens changes, such as chassis flexing, vibrations and thermal expansion of a wide range of amplitudes and frequencies, and other conditions. For example, the fastener clip may adapt to changes in thermal expansion, especially due to the differences in thermal expansion rates between dissimilar metals or metal to plastic with respect to the vehicle chassis components and/or between plastic components such as the interior trim panels attached to the metal vehicle chassis. The fastener clip may also fasten to plastic and/or metal engagement structures. The fastener clip 10, 1210 and retainer 40 may be made of anti-corrosive material such as over molded rubber, plastic or treated metal to provide long reliable service life.

The pin 20 and grommet 30 (upper clip 1230 and lower clip 1220) without reinforcement from the retainer 40 permits relatively easy insertion of the fastener clip into a chassis slot 1320 formed within the vehicle chassis 630 while providing a relatively high level of extraction force from the vehicle chassis 630 when the retainer 40 is inserted. Assembly of the body panel onto the vehicle chassis requires a relatively low level of insertion force compared to the extraction force, and as a result provides many ergonomic advantages. For example, the relatively low level of insertion force is particularly advantageous for assembly line operators who repetitively insert body panels onto the vehicle chassis. The relatively low level of insertion force required for inserting the body panel into the vehicle chassis may result in fewer injuries to the assembly workers, including injuries related to repetitive stress syndrome. By eliminating conventional clips for fastening to the door frame, assembly of the body panel to the chassis with the two-piece detachable fastener clip significantly reduces material costs, assembly costs, and/or servicing time and servicing cost depending on the application. Further, by eliminating multiple fasteners for different sheet metal thicknesses, confusion during assembly is eliminated or reduced since the same type of fastener may be used for all slots. Thus, an assembly worker need not worry about selecting the wrong fastener for different slot thicknesses.

According to one embodiment, in a high retention or heavy-duty automotive applications the removal force is 10% to 40 % of the retention force such as 10, 20, 30, 40, 50, 100+ pounds or any force suitable for the application. Depending on the particular design, the retention and removal forces may be significantly higher or lower depending on the requirements. For example, for even higher retention force applications the removal force may be several hundred or thousands of pounds and the removal force may be a fraction of this force. For lighter duty applications, the retention may be a few or a fraction of a pound. The dimensions for the clip may be selected based on the required: set up height, slot size, retention and removal force, size shape and type of retainer 40. An entire family of clips may be designed for a wide range of applications from the smallest application to the largest according to the various functions described. In other words, the functions described may be scaled up and downa nd designed according to the requirements.

According to an alternative embodiment, the wing tip shape may be pointed at any suitable angle, rounded according to any suitable radius, oval, multi tipped, rhombus or any suitable shape. Accordingly, the interference notch and removal ramp may have any suitable shape and size corresponding the shape and size of the wing tip. For example, if a higher retention or removal force is required then the shapes may be selected to provide more surface area contact and more engagement. The angle and shape of the interference notch and removal ramp may thus be selected to provide the appropriate engagement force when in the high retention stage yet provide the appropriate removal force as the wing tip slides along the removal ramp to facilitate ergonomic removal. In the event the clip is not in the high retention stage, the clip will simply fall out indicating to the operator that the clip is not engaged and to ensure the clip is properly inserted and engaged. Wing tips if optionally pointed must be pointed enough to allow withdrawal. The wing tip may have a radius and an interference notch is greater than 90 degrees to allow wing tip to ride along the upper notch.

Further, the retainer 40 size, shape, length, width and hardness may all be selected as a matter of design choice to strengthen the pin walls and the corresponding attached interference notch, engagement and removal ramps.

Yet another advantage is that the fastener clip is relatively easy to manufacture using relatively inexpensive manufacturing processes and materials. A plastic or metal design is inexpensive compared to conventional designs. The use of the fastener clip decreases production costs, increases worker productivity and efficiency and decreases overall vehicle assembly costs. The fastener clip exhibits little or no play and also dampens vibrations and thus eliminates or substantially reduces buzz, squeak and rattles. The fastener clip securely attaches and adapts any suitable body panel to the vehicle chassis, such that the fastener clip improves reliability both in the short term and in the long term, while further improving vehicle safety and quality.

Fig. 1 is a sideview of a detachable automotive fastener clip in a stage 1, for attachment of a body panel to a chassis slot, including: a pin 20 having a pin head 1010 at one end of the pin 20, the pin 20 including: an assembly notch 1020 formed in the pin head 1010; a flange 1030 on an end opposite the pin head 1010, the flange 1030 has a hole 1040; and walls 1050 formed between the pin head 1010 and the flange 1030 ; a grommet 30 to ]removably attached to the pin 20, the grommet 30 including; a grommet base 910 including: two parallel shoulders 920 on opposite ends of the grommet base 910, connected to two parallel opposite net pads 930; at least two wings 410 extend from each of the parallel opposite shoulders 920; and wing tips 940 at an end of the at least two wings 410. The at least two wings 410 including a flex point 950 operative to engage and detach with the chassis slot 630; and a retainer 40 removably inserted into the hole 1340 to engage the walls of the pin 20 and to removably attach to the body panel 1310.

For example, the retainer 40 may be a metal screw that is securely attached to a self-tapping hole 1040, 1340 in the pin 20 on flange 1030 that fills the inside of the pin 20 with a rigid metal support to significantly increase the rigidity of the pin 20 walls. The pin 20 wall rigidity directly affects the rigidity of the interference notch, engagement (upper) and removal ramps as explained. The retainer 40 prevents walls of pin 20 from collapsing.

In some aspects, the hole 1040, 1340 is a self-coupling hole such that during a stage 1: as the retainer 40 is inserted into the self-coupling hole 1040, 1340 the retainer 40 removably retains engagement with and reinforces the walls 120, 1410 and the wing tips 940 engage the assembly notch.

The retainer 40 is at least one of: a screw, a bolt, a push pin, a clip, an injection molded prong, and a rivet.

During a stage 2 the retainer 40 is inserted slot such that the parallel opposite net pads 930 engage the chassis slot.

The wings 410 may include a nub 960 to slide past the chassis slot 1320 and the wings 410 flex inwardly when sliding past an edge of the chassis slot 1320 until the nub 960 and each wing 410 snap out to engage the chassis 630 to resist removal of the wings 410 and grommet 30 from the chassis 630.

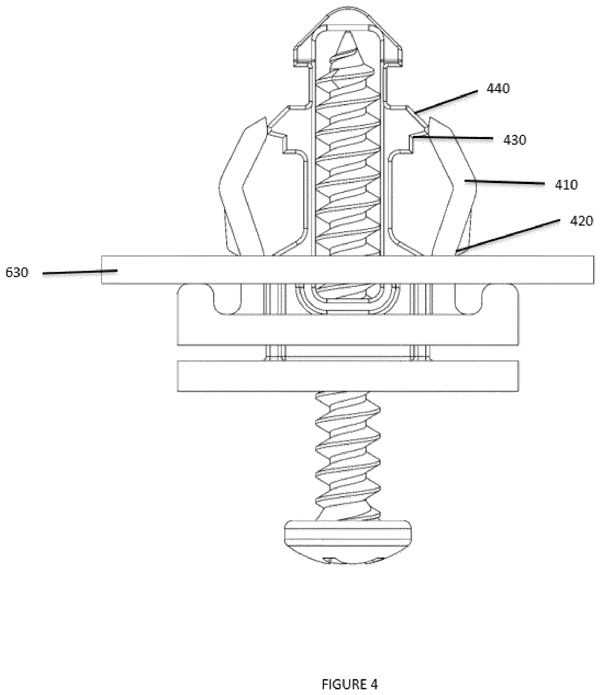

As shown in Fig. 4, 5, 10 the pin 20 further includes: an interference notch 430; and a ramp 440 next to the interference notch 430 between the pin head 1010 and the flange 1030; wherein during a stage 3 further inserting the flange 1030, the pin 20 and the retainer 40, deeper into the chassis slot 1320 to cause the wings 410 of the grommet 30 to slide past the ramp 440 and to flex the wings 410 outwardly and to snap into the interference notch 430 at a set up height.

During the stage 3, a wing portion of the wing engages an inside edge of the chassis slot, preventing the wing portion engaging the slot from flexing outwardly thereby causing the wing portion above the slot to flex outwardly, such that the wing portion above the slot flexes [fulcrum] at a flex point, and overhangs and engages an upper inside slot edge thus resisting withdrawal of the wing resulting in a high retention engagement of the clip and body panel. Among other advantages, there is substantially no play between the body panel and the chassis slot.

The pin 20, grommet 30, the retainer 40 may be separately injection molded.

The body panel 1310 may include a support rib and/or housing 1810, 820.

In some aspects, the wings further include a nub to engage the chassis to resist removal of the wings and grommet 30 from the chassis, and the wings flex inwardly when sliding past an edge of the chassis slot.

The pin 20 further includes: an interference notch 430; and a ramp next to the interference notch 430 between the pin head and the flange; wherein during a stage 3 further inserting the flange, the pin 20 and the retainer 40, deeper into the chassis slot to cause the wings of the grommet 30 to slide past the ramp and to flex the wings outwardly and to snap into the interference notch 430 at a set up height.

In some aspects, the techniques described herein relate to a fastener assembly wherein during the stage 3, a wing portion of the wing in the chassis slot engages an inside edge of the chassis slot preventing the wing portion engaging the slot from flexing outwardly thereby causing the wing portion above the slot to flex outwardly such that the wing portion above the slot at a flex point, flexes [fulcrum] and overhangs and engages an upper inside slot edge thus resisting withdrawal of the wing resulting in a high retention engagement.

The pin 20 further includes: a ramp next to the interference notch 430 between the pin head and the flange; wherein during a stage 3 further inserting the flange, the pin 20 and the retainer 40, deeper into the chassis slot to cause the wings of the grommet 30 to slide past the ramp and to flex the wings outwardly and to snap into the interference notch 430 at a set up height.

The retainer 40 is at least one of: a screw, a bolt, a push pin, a clip, an injection molded prong, and a rivet.

A fastener assembly may be assembled by a tier one supplier by inserting a detachable automotive fastener clip 10, 1210 to a body panel 1310 via a support rib / housing 1810, 820 for attachment of the body panel 1310 to a chassis slot 1320. The assembly may be attached to the vehicle such that the at least two wings 410 comprising a flex point 420 operative to engage and detach with the chassis slot 1320. A retainer 40 removably inserted through the support rib and/or housing 1810, 820 and into the hole 1340 to engage the walls of the pin 20 and to removably attach the support rib and/or housing 1810, 820 on the body panel 1310.

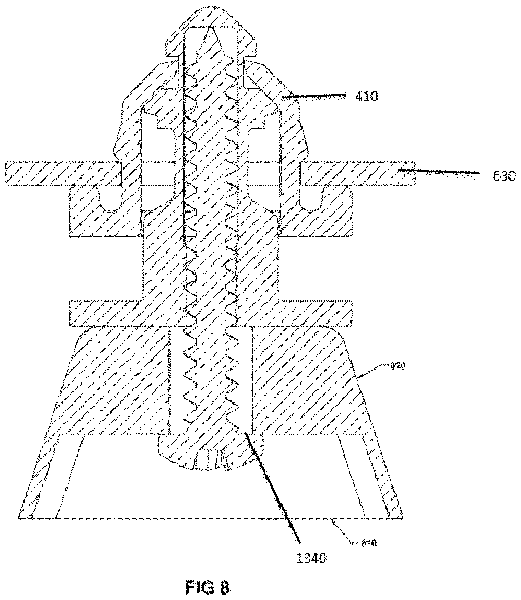

Fig. 8 is a perspective view of a body panel assembly 800 according to one embodiment. The body panel assembly 800 comprises a body panel 810, such as a door mounting assembly having a support rib and/or housing 1810, 820 and a retainer 40 or fastener such as a screw, bolt, rivet or any suitable fastener to engage the fastener clip 10. The fastener clip 10 is operatively inserted into a slot 640 defined in a chassis 630. The fastener clip 10 optionally adapts to different chassis thicknesses and curvatures.

According to one embodiment, the fastener clip assembly 700 may be preassembled with fastener 10 including pin 20, grommet 30, and optionally retainer 40 and delivered to an assembler of the body panel assembly such as a door, visor or headliner assembly. The fastener clip assembly 700 is ready for attachment to the body panel 810 during final vehicle assembly by pushing the assembly 700 assembly into slot 640 of chassis 630. Thus, the assembler of the door, visor or headliner assembly simply attaches the fastener clip assembly 700 by pushing it into the slot 640.

Many vehicles now include side curtain air bags, which are mounted optionally in the door panel or in the area above and adjacent the panel for example. However, for such a configuration there is the possibility that the door panel could be in a position causing the air bag to be blocked or otherwise block or interfere with operation of the airbag. The fastener clip assembly 700, 1800 prevents or reduces such blocking or interference with the air bag and otherwise withstands or directs the force of air bag deployment. For example, the fastener 10 may provide sufficient extraction force to prevent or reduce disengagement during deployment of the air bag. As a result, fastener 10 may replace screws or other fasteners for fastening the fastener clip assembly 700 to the chassis 630 to provide the requisite high level of extraction force while significantly reducing assembly and servicing time and cost.

According to the embodiments shown in Figs. 1-12, a two-piece mold is used to produce the clip 10 including the pin 20 and grommet 30, although any suitable number of molds may be used. Pin 20, grommet 30, retainer 40 or any combination of components may be made from: Polypropylene, glass fill, acetal, plastic, vinyl, rubber, plastisol, plastic, acetal, polyacetal, polyoxymethylene, nylon, any suitable polymeric material, polycarbonate, thermoplastic resin, fiberglass and carbon fiber and Acrylonitrile butadiene styrene (ABS), and/or carbon fiber or any suitable material and combination thereof suitable for injection molding. In some aspects, the pin 20, the grommet 30 and retainer 40 are made of at least one of: metal, thermoplastic material, rubber, plastisol, plastic, acetal, polyacetal, polyoxymethylene, nylon, fiber glass, and carbon fiber.

Figs. 12 through 31 illustrate an alternative embodiment of the detachable multi-stage fastener clip 1210 generally. According to this embodiment, the fastener clip 1210 is made of two-piece metal.

According to the embodiments shown in Figs. 12 through 31, the fastener clip 10 is made of: steel, tin aluminum, magnesium, copper, carbon fiber or any suitable metal or alloy. Any suitable material may be used in any combination such as steel, tin and/or any suitable metal. According to an alternative embodiment, a coating is applied on the fastener clip 10 made of at least one of: nickel plating, zinc plating, foam, rubber, plastisol, plastic, acetal, polyacetal, polyoxymethylene, nylon, fiberglass and/or carbon fiber to suitably provide corrosion resistance and to reduce NVH and rattling.

The body panel 810, 1310 such as a door panel, visor bracket and headliner, may be constructed from plastic or from any suitable material such as wood, steel, aluminum, magnesium, wood, plastic, fiber glass, carbon fiber or any suitable material.

Fig. 12, 14 and 15 are various views of an upper clip 1230 and a lower clip 1220 according to the alternative embodiment. According to this embodiment a detachable multi-stage automotive fastener clip 1210 attaches a body panel 1310 to a chassis slot 1320. The fastener clip 1210 includes a U-shaped upper clip 1230 having at least two wings 1250, laterally spaced apart forming a U shape. The upper clip 1230 consists of two main components: two longitudinally planar wings 1250 and two latitudinally planar feet 1280 opposite of each other. The wings 1250 includes a wing tip 1252 at an open end 1254 of the at least two wings 1250, a bent wing 1256 extending from the at least two wings 1250 and away from the open end 1254. An inclined plane 1258 is formed between the bent wing 1256 and the wing tip 1252. A lower wing portion 1310 extends from the bent wing 1256 away from the open end 1254. A flex point 1370 is formed on a portion of the lower wing portion 1302 operative to engage and detach with the chassis slot 1320.

A foot (feet) 1280 is formed opposite the open wing end 1254 and coupled to the lower wing portion 1302 forming the U shape upper clip 1230. Elbows 1290 connect to the feet 1280 to the lower wing portion 1310. These elbows 1290 are curved, and have the ability to flex and extend, therefore expanding and contracting the width of the wings 1250. Above the elbows 1290 are ridges 1270 that will make contact with the edge of the hole 1320 in the chassis 630 that the clip 10, 1210 is inserted into. These ridges 1270 will catch the edge of the opening 1320 and increase security of the clip 10, 1210 against the chassis 630. The upper part of the wings 1300 flex just above elbows 1290 and are curved inwards towards each other at an angle greater than 90 degrees from the lower wing portions 1302.
440 U-shaped lower clip 1220 removably attaches to the U-shaped upper clip 1230. The U-shaped lower clip 1220 is composed of a base 1330 connected to two opposing walls 1410. At least two walls 1410 are laterally spaced apart forming a U shape having a head at an open wall end 1380. These at least two walls 1410 are attached to the base 1330 with a flexible elbow 1290 that allows for flexion and extension. In other words, the elbow 1290 allows for the expansion of the walls 1410 during insertion of the retainer 40. At the top edge of each wall 1410 is a tab 1400. The edge then slopes downward, creating a ramp 1390 on both sides. A ramp 1390 is formed on the at least two walls 1410 away from the open wall end 1380 operative to engage the inclined plane 1258. Thus, the ramp 1390 allows the wings 1250 of the upper clip 1230 to slide down during stage 2. A shoulder 1392 is formed at an end of each ramp 1390 opposite the open wall end 1380. A retaining ledge 1360 is formed at an end of the shoulder 1392 opposite from the ramp 1390. Once the clip 10, 1210 is in stage 3, the wings 1250 will be in place in the retaining ledge 1360. Below the retaining ledge 1360 has a slope 1382 with an acute angle that allows for tolerancing. Below the slope the sides of the wall 1410 become longitudinally straight, and then with two rigid elbows 1290, connect to the base 1330 of the lower clip 1220. A lower wall portion 1410 extends from the retaining ledge 1360 away from the open wall end 1380.

A base 1330 at a closed end opposite the open wall end 1380 is formed such that the base 1330 is formed between the lower wall portion 1410 from each of the at least two walls 1410 forming a U shape. The base 1330 has a retainer hole 40, 1340 in the direct center of the base 1330. Hole 1340 is where the retainer 40 will be inserted into the lower clip 1220. On either side are two service holes 1350 that are used for removal of the clip 10, 1210. This is where a pin or similar device will be inserted to widen the width of the wings 1250 and allow the upper clip 1230 to be separated from the lower clip 1220. On either side of the base 1330 are two extended legs 1420. These legs 1420 will slide into a housing 1810 that will be attached to the body panel 1310.

Figs 16 and 17 are perspective and side views of the upper clip 1230 and a lower clip 1220 in a shipping configuration at a stage one according to the alternative embodiment. For example, a tier 2 supplier assembles the upper clip 1230 and a lower clip 1220 and ships to a tier 1 body panel supplier. At a stage 1, the wing tips 1252 further include wing ears 1260 to form a notch 1610 between the wing ears 1260 on each of the at least two wings 1250. The open wall end 1380 further includes a tab 1400 in between each ramp 1390, wherein the wing ears 1260 engage each tab 1400.

Fig. 13 is a perspective view of the upper clip 1230 including a wing extension.

Figs. 18, 19 and 20 are various views of the upper clip 1230 and a lower clip 1220 for attachment with a body panel 1310 via a retainer 40 at a stage 2 according to the alternative embodiment. At stage 2 the fastener clip 1210 has the upper clip 1230 and a lower clip 1220 coupled and ready for the tier 2 body panel assembly. A retainer 40 is removably inserted into the self-coupling hole 1340 of base 1330 to engage the at least two walls 1410 of the lower clip 1220 and to removably attach to the body panel 1310 as the retainer 40 is inserted into the self-coupling hole 1340. The retainer 40 thus removably retains engagement with and reinforces the walls 1410 of the lower clip 1220. The ramps 1390 on the wing tips 1252 engage the inclined plane 1258 of the at least two wings 1250. At stage 2 the retainer 40 is inserted into the body panel 1310 and into the self-coupling hole. The retainer 40 may be a screw, a bolt, a push pin, a clip, an injection molded prong, and/or a rivet, or any suitable type of retainer.

Figs. 21, 22 and 23 are various views of the upper clip 1230 and a lower clip 1220 attaching a body panel 1310 to a chassis 630 prior to entering engagement at stage 3 according to the alternative embodiment. As the retainer 40 is inserted, the feet 1280 act as flanges at the bottom of the upper clip 1230 that are on the opposite side of the upper clip 1230 cause the upper clip 1230 to "slide" downwards relative to the lower clip 1220 until the wings 1250 widen and catch onto the retaining ledge 1360 of the lower clip 1220, "clicking" into place.

The detachable multistage automotive fastener clip 1210 is further inserted just before engagement at a stage 3, the wing tips 1252 further include wing ears 1260 to form a notch 1610 between the wing ears 1260 on each of the at least two wings 1250 to slide past the chassis slot 1320. Further the open wall end 1380 includes a tab 1440 in between each tapered wall end 1380 such that as the retainer 40 engages the at least two walls 1410, each tab 1440 springs away from each other inside the notch 1610, wherein the wing ears 1260 engage each tab 1440 to resist the at least two walls 1410 from further displacement away from each other. In other words, ears 1260 will prevent the walls 1410 of the lower clip 1220 from expanding greater than the width of the space formed by the notch 1610 between the two ears 1260.

As the retainer 40 engages walls 1410, the walls 1410 spring open and widen. Walls 1410 will only widen to a maximum width of what the wing ears 1260 of the wings 1250 on the notch 1610 allow. The retainer 40 and the walls 1410 of the pin 20 / lower clip 1220 will be flush, so as to not have movement of the walls 1410. If a force is exerted at any angle, the walls 1410 of the pin 20 / lower clip 1220 will stay in place, increasing security of the fastener 10, 1210 as a whole.

Figs. 24, 25 and 26 are various views of the upper clip 1230 and a lower clip 1220 attaching a body panel 1310 to a chassis 630 in an engagement stage 3 according to the alternative embodiment. Fig 27 is a top view and Fig. 28 is a bottom view of the upper clip 1230 and lower clip 1220.

Upon insertion of the retainer 40, the lower wings 1302 will bow outwards and rest on the chassis slot 1320 due to the expansion of the upper wings 1300, effectively making the detachable multistage automotive fastener clip 1210 more secure by providing another point of support.

The detachable multistage automotive fastener clip 1210 is further inserted such that the lower clip 1220 and the upper clip 1230 are inserted deeper into the chassis slot 1320 during a stage 3 and further resulting in the ramp 1390 to engage the inclined plane 1258 resulting in the wings 1250 to spring apart deeper into the chassis slot 1320 and to cause the ramp 1390 to slide past the inclined plane 1258 and to flex the wings 1250 outwardly at the flex point 1370 to detachable engage the chassis slot 1310, and to snap the wing tips 1252 into the retaining ledge 1360 at a set up height. During engagement at stage 3, the flex point 1370 of the wing 1250 engages an inside edge of the chassis slot 1310, preventing the flex point 1370 from flexing outwardly thereby causing a lower wing portion 1302 above the chassis slot 1320 to flex outwardly, such that the lower wing portion 1302 above the chassis slot 1320 flexes at a fulcrum at the flex point 1370, and overhangs and engages an upper inside slot edge thus resisting withdrawal of the wing 1250 resulting in a high retention engagement of the detachable multistage automotive fastener clip 1210 and the body panel 1310. According to one embodiment, the flex point 1370 further includes a plurality of wing ridges such that at least one of the plurality of wing ridges engage the chassis slot 1320 at a stage 3. Among other advantages, the wings 1250 engage the chassis slot 1320 such that there is substantially no play between the body panel 1310 and the chassis slot 1310.

### OPTIONAL WING EXTENSION

Figs. 29, 30 and 31 are various views of the upper clip 1230 including a wing extension 2910 of Fig. 13, and a lower clip 1220 attaching a body panel 1310 to a chassis after engagement at stage 3 according to the alternative embodiment. Wing extension 2910 protrudes downwards in the space between each side of the lower wings 1250. According to this embodiment the upper clip 1230 further includes a wing extension 2910 extending from the inclined plane 1258 to engage the chassis slot 1310. The wing extension 2910 consists of two non-flexible elbows 1290, and the bottom tip 3010 makes contact with the edge of the hole 1320 in the chassis 630 that the clip 10, 1210 is inserted into. The wing extension 2910 has a length, width and shape suitable to engage the chassis slot 1310.

### REMOVAL

The clip 10, 1210 may be removed and reattached. The removal process includes partially or fully removing the retainer 40. To remove the clip 10, 1210, detach the retainer 40 via unscrewing the screw partially and thus the operator may leave the retainer 40 partially screwed in. As the body panel 1310 is pulled away from the chassis, the (pin) walls 1410 will bow inwardly and will collapse together toward each other allowing the pin 20 / lower clip 1220 to be removed from the grommet 30 / upper clip 1230 with an extraction force less than when in the engaged or stage 3 as will be described. Thus, partially extracting the retainer 40 resets clip 10, 1210 to stage 2, or 1 to allow the clip 10, 1210 for removal and ready for insertion again. Two-piece fasteners are used so that if the panels are removed after original installation, such as to service the components in the door, they may be pulled apart so that one portion remains attached to the sheet metal while the other remains attached to the trim panel. The two pieces may also be reattached after separation. Optionally, the user removes the retainer 40, then inserts a pin/key into the clearance /service hole 1350 at the base 1330. This will effectively widen the wings 1250 of the grommet 30 / upper clip 1230 and allow the user to pull the pin through the clearance /service hole 1350 and out of the chassis 630.

For example, partially extracting the retainer 40 allows an operator to detach and re-attach the fastener 10, 1210 to a slot 1320 in a chassis 630. Once the retainer 40 is removed, at least enough to no longer support or back up the walls 1410 supporting the retaining ledge 1360 and shoulder 1392, then the retaining ledge 1360 and shoulder 1392 are more flexible and the force of the wings 1250 causes the retaining ledge and shoulder 1392 to collapse and flex inwardly allowing the wing tips 1252 to slide past the removal ramp 1390. The removal ramp 1390 may have an angle greater than 90 degrees relative to the walls 1410 such as 100 to 130 degrees, for example 110 degrees or any suitable angle. After the wing tips 1252 slide past the upper ramp 1390 the wing tips 1252 relax to a less flexed state because the wing tips 1252 engage a narrower portion of the open wall end 1380 in a pre-engagement position. Since the wings 1250 are not in a flexed position, the wings 1250 do not flex or overhang over the slot edge 1320 and do not engage the slot 1320 so that the pin 20 / lower clip 1220 and grommet 30 / upper clip 1230 may be removed with a relatively lower removal force. Effectively, the pin 20 / lower clip 1220 pulls the grommet 30 / upper clip 1230 out of the chassis slot 1320. This is an advantage because an operator is not required to use an optional screw driver to pull the clip out as is necessary with conventional clips.

According to one embodiment, the fastener clip is a one piece design that performs with all or most of has the advantages of a two piece designs but at the cost of a one piece design.

It is understood that the implementation of other variations and modifications of the present invention in its various aspects will be apparent to those of ordinary skill in the art and that the invention is not limited by the specific embodiments described. For example, the geometry can change as a matter of design choice. The functionality would be similar. Thus, the dimensions can scale up and scale down. For example, different ratios of width to depth can be appropriate. It is therefore contemplated to cover by the present invention any and all modifications, variations or equivalents that fall within the spirit and scope of the basic underlying principles disclosed and claimed herein.

## Claims

1. A detachable multi-stage automotive fastener clip for attachment of a body panel to a chassis slot, comprising:
a U shaped upper clip comprising;
at least two wings, laterally spaced apart forming a U shape comprising;
a wing tip at an open end of the at least two wings;
a bent wing extending from the at least two wings and away from the open end;
an inclined plane formed between the bent wing and the wing tip;
a lower wing portion extending from the bent wing away from the open end; and
a flex point on a portion of the lower wing portion operative to engage and detach with the chassis slot;
a foot opposite the open end and coupled to the lower wing portion forming the U shape;
a U shaped lower clip to removably attach to the U shaped upper clip, comprising;
at least two walls, laterally spaced apart forming a U shape comprising:
a head at an open wall end;
a ramp formed on the at least two walls away from the open wall end operative to engage the inclined plane;
a shoulder formed at an end of each ramp opposite the open wall end;
a retaining ledge formed at an end of the shoulder opposite from the ramp; and
a lower wall portion extending from the retaining ledge away from the open wall end; and
a base at a closed end opposite the open wall end such that the base is formed between the lower wall portion from each of the at least two walls forming a U shape.

2. The detachable multi-stage automotive fastener clip of claim 1, wherein at a stage 1 the wing tip further include wing ears to form a notch between the wing ears on each of the at least two wings and wherein the head further includes a tab in between each ramp, wherein the wing ears engage each tab.

3. The detachable multi-stage automotive fastener clip of claim 1, wherein at a stage 2 the base has a self-coupling hole:
a retainer is removably inserted into the self-coupling hole to engage the at least two walls of the U shaped lower clip and to removably attach to the body panel as the retainer is inserted into the self-coupling hole, the retainer removably retains engagement with and reinforces the at least two walls of the U shaped lower clip;
wherein the ramp on the wing tip engages the inclined plane of the at least two wings.

4. The detachable multi-stage automotive fastener clip of claim 3 wherein during the stage 2 the retainer is inserted into the body panel and into the self-coupling hole.

5. The detachable multi-stage automotive fastener clip of claim 3 wherein the retainer is at least one of: a screw, a bolt, a push pin, a clip, an injection molded prong, and a rivet.

6. The detachable multi-stage automotive fastener clip of claim 3, wherein at a stage 3 the wing tip further include wing ears to form a notch between the wing ears on each of the at least two wings to slide past the chassis slot and wherein the head further includes a tab in between each tapered wall end such that as the retainer engages the at least two walls, each tab springs away from each other inside the notch, wherein the wing ears engage each tab to resist the at least two walls from further displacement away from each other.

7. The detachable multi-stage automotive fastener clip of claim 1
wherein the U shaped lower clip and the U shaped upper clip are inserted deeper into the chassis slot during a stage 3 and further resulting in the ramp to engage the inclined plane resulting in the at least two wings to spring apart deeper into the chassis slot and to cause the ramp to slide past the inclined plane and to flex the at least two wings outwardly at the flex point to detachable engage the chassis slot, and to snap the wing tip into the retaining ledge at a set up height.

8. The detachable multi-stage automotive fastener clip of claim 7 wherein during the stage 3, the flex point engages an inside edge of the chassis slot, preventing the flex point from flexing outwardly thereby causing a lower wing portion above the chassis slot to flex outwardly, such that the lower wing portion above the chassis slot flexes at the flex point, and overhangs and engages an upper inside slot edge thus resisting withdrawal of the at least two wings resulting in a high retention engagement of the detachable multi-stage automotive fastener clip and the body panel.

9. The detachable multi-stage automotive fastener clip of claim 1 wherein the flex point further includes a plurality of wing ridges such that at least one of the plurality of wing ridges engage the chassis slot at a stage 3.

10. The detachable multi-stage automotive fastener clip of claim 1 wherein there is substantially no play between the body panel and the chassis slot.

11. The detachable multi-stage automotive fastener clip of claim 1 wherein the U shaped upper clip further includes a wing extension extending from the inclined plane to engage the chassis slot.

12. The detachable multi-stage automotive fastener clip of claim 1 wherein the U shaped upper clip, the U shaped lower clip and retainer are made of at least one of:
metal, thermoplastic material, rubber, plastisol, plastic, acetal, polyacetal, polyoxymethylene, nylon, fiber glass, and carbon fiber.

13. A fastener assembly comprising:
a body panel comprising a support rib;
a detachable automotive fastener clip for attachment of a body panel to a chassis slot, comprising:
a U shaped upper clip comprising;
at least two wings, laterally spaced apart forming a U shape comprising;
a wing tip at an open end of the at least two wings;
a bent wing extending from the at least two wings and away from the open end;
an inclined plane formed between the bent wing and the wing tip;
a lower wing portion extending from the bent wing away from the open end; and
a flex point on a portion of the lower wing portion operative to engage and detach with the chassis slot; and
a foot opposite the open end and coupled to the lower wing portion forming the U shaped upper clip; and
a U shaped lower clip to removably attach to the U shaped upper clip, comprising;
at least two walls, laterally spaced apart forming a U shape comprising:
a head at an open wall end;
a ramp formed on the at least two walls away from the open wall end operative to engage the inclined plane;
a shoulder formed at an end of each ramp opposite the open wall end;
a retaining ledge formed at an end of the shoulder opposite from the ramp; and
a lower wall portion extending from the retaining ledge away from the open wall end; and
a base at a closed end opposite the open wall end such that the base is formed between the lower wall portion from each of the at least two walls forming a U shape such that the base engages the body panel.

14. The fastener assembly of claim 13, wherein at a stage 1 the wing tip further includes wing ears to form a notch between the wing ears on each of the at least two wings and wherein the head further includes a tab in between each ramp, wherein the wing ears engage each tab.

15. The fastener assembly of claim 13 wherein at a stage 2 the base has a self-coupling hole:
a retainer is removably inserted into the self-coupling hole to engage the at least two walls of the U shaped lower clip and to removably attach to the body panel as the retainer is inserted into the self-coupling hole, the retainer removably retains engagement with and reinforces the at least two walls of the U shaped lower clip;
wherein the ramp engages the inclined plane of the at least two wings.

16. The fastener assembly of claim 15 wherein during the stage 2 the retainer is inserted into the body panel and into the self-coupling hole.

17. The fastener assembly of claim 15 wherein the retainer is at least one of: a screw, a bolt, a push pin, a clip, an injection molded prong, and a rivet.

18. The fastener assembly of claim 14 wherein during a stage 3, a wing portion of the at least two wings in the chassis slot engages an inside edge of the chassis slot preventing the wing portion engaging the chassis slot and from flexing outwardly thereby causing the wing portion above the chassis slot to flex outwardly such that the wing portion above the chassis slot at a flex point, flexes and overhangs and engages an upper inside slot edge thus resisting withdrawal of the at least two wings resulting in a high retention engagement.

19. The fastener assembly of claim 15 wherein at a stage 3 the wing tip further include wing ears to form a notch between the wing ears on each of the at least two wings to slide past the chassis slot and wherein the head further includes a tab in between each tapered wall end such that as the retainer engages the at least two walls, each tab springs away from each other inside the notch, wherein the wing ears engage each tab to resist the at least two walls from further displacement away from each other.

20. The fastener assembly of claim 13 wherein the flex point further includes a plurality of wing ridges such that at least one of the plurality of wing ridges engage the chassis slot at a stage 3.

21. A vehicle comprising:
a vehicle chassis having a chassis slot;
a body panel comprising a housing; and
a detachable automotive fastener clip for attachment of a body panel to the chassis slot, comprising:
a U shaped upper clip to removably attach to the chassis slot, comprising;
at least two wings, laterally spaced apart forming a U shape comprising;
a wing tip at an open end of the at least two wings;
a bent wing extending from the at least two wings and away from the open end;
an inclined plane formed between the bent wing and the wing tip;
a lower wing portion extending from the bent wing away from the open end; and
a flex point on a portion of the lower wing portion operative to engage and detach with the chassis slot; and
a foot opposite the open end and coupled to the lower wing portion forming the U shaped upper clip;
a U shaped lower clip to removably attach to the U shaped upper clip, comprising;
at least two walls, laterally spaced apart forming a U shape comprising:
a head at an open wall end;
a ramp formed on the at least two walls away from the open wall end operative to engage the inclined plane;
a shoulder formed at an end of each ramp opposite the open wall end;
a retaining ledge formed at an end of the shoulder opposite from the ramp; and
a lower wall portion extending from the retaining ledge away from the open wall end; and
a base at a closed end opposite the open wall end such that the base is formed between the lower wall portion from each of the at least two walls forming a U shape, such that the base engages the housing.
